# EUROPEAN PATENT APPLICATION

(11) **EP 4 692 471 A1**
(43) Date of publication of application: **11.02.2026**
(21) Application number: 24862660.8
(22) Date of filing: 27.08.2024
(51) Int. Cl.: E02F 9/20, E02F 9/16

(54) **OPERATION DEVICE AND OPERATION SYSTEM**

(30) Priority: 08.09.2023 JP 2023146007; 23.08.2024 JP 2024141726
(71) Applicant: KOBELCO CONSTRUCTION MACHINERY CO., LTD., Hiroshima-shi, Hiroshima 731-5161 (JP)
(72) Inventor: MATSUDA, Yuya, Hiroshima-shi, Hiroshima 731-5161 (JP)
(74) Representative: TBK
(86) International application number: PCT/JP2024/030527
(87) International publication number: WO 2025/053008

(57) **Abstract**

This operation device for operating an operated object includes: a seat (24); an operation mechanism (211) that receives an operation by an operator; a drive device (224) capable of adjusting an orientation of the seat; and a control device (200) capable of controlling the drive device to execute a first drive process of adjusting the orientation of the seat such that the orientation of the seat changes in a time series according to a time series of an orientation of the operated object, and a second drive process of adjusting the orientation of the seat to a designated orientation in a non-operation state where there is no operation instruction for the operated object through the operation mechanism.

## Description

### Technical Field

The present invention relates to an operation device and an operation system for operating an operated object.

### Background Art

A technique has been proposed in which information on a work machine is provided to an operator who remotely operates the work machine as an operated object in a sensible manner (see, for example, Patent Literature 1). The technique discloses a remote control system of a work machine in which an operator controls the work machine from a remote control facility installed at a remote place. The remote control facility includes a seat on which the operator sits and an inclination drive means for inclining the seat, and the work machine includes an inclination detection means for detecting an inclination direction and an inclination amount of the machine body. The inclination drive means tilts the seat such that the seat is synchronized with the inclination direction and the inclination amount of the machine body detected by the inclination detection means during travelling of the work machine, and controls the inclination of the seat such that the inclination amount at the moment of stopping travelling is maintained when the work machine is not travelling.

### Citation List

### Patent Literature

Patent Literature 1: Japanese Patent No. 6220961
When the operator does not have an intention to operate the work machine such as at the time of non-operation, if the seat is inclined so as to conform to the inclination of the machine body as in the above technique, the operator seated on the seat may feel unpleasant or uncomfortable.

### Summary of Invention

An object of the present invention is to provide an operation device and an operation system that allow an operator to comfortably perform an operation.

Provided according to the present invention is an operation device for operating an operated object, the operation device including: a seat; an operation mechanism that receives an operation by an operator; a drive device capable of adjusting an orientation of the seat; and a control device capable of controlling the drive device to execute a first drive process of adjusting the orientation of the seat such that the orientation of the seat changes in a time series according to a time series of an orientation of the operated object, and a second drive process of interrupting execution of the first drive process and adjusting the orientation of the seat to a designated orientation in a non-operation state where there is no operation instruction for the operated object through the operation mechanism.

An operation system provided by the present invention includes the operation device described above and the operated object.

### Brief Description of Drawings

FIG. 1 is a configuration diagram of an operation system according to an embodiment of the present invention.
FIG. 2 is a perspective view of a remote operation device according to the embodiment of the present invention.
FIG. 3 is a perspective view of a work machine according to the embodiment of the present invention.
FIG. 4 is a flowchart of an operation system according to the embodiment of the present invention.
FIG. 5 is a flowchart of a first drive control process of the operation system according to the embodiment of the present invention.
FIG. 6 is a flowchart of a second drive control process of the operation system according to the embodiment of the present invention.
FIG. 7 is a diagram illustrating a working environment image in the operation system according to the embodiment of the present invention.

### Description of Embodiments

### (Configuration of Operation System)

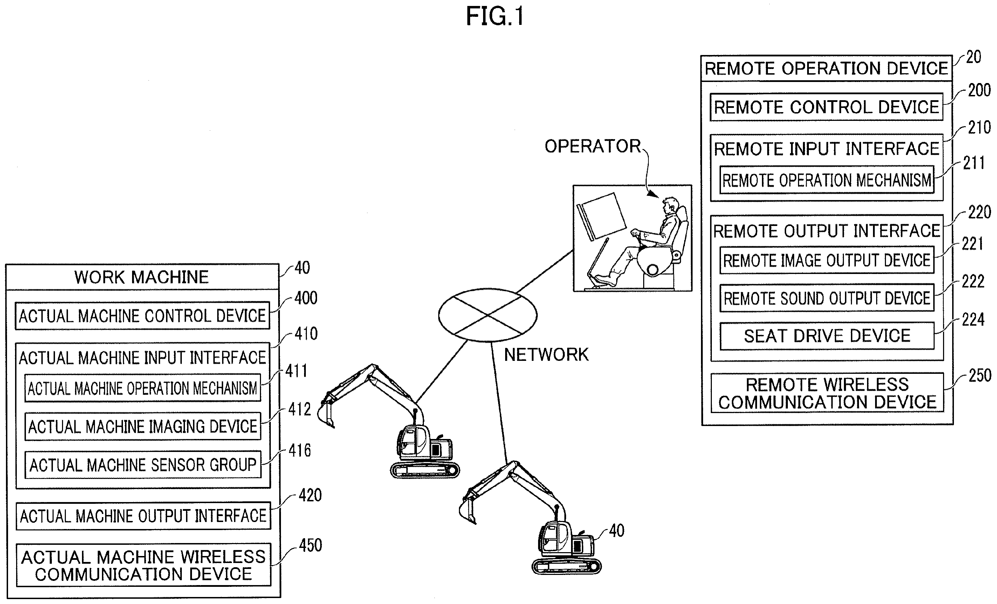

FIG. 1 is a configuration diagram of an operation system according to an embodiment of the present invention. The operation system includes a remote operation device 20 (operation device), and remotely operates a work machine 40 by the remote operation device 20. In another embodiment, the operation system may include the work machine 40. The remote operation device 20 and the work machine 40 are able to perform network communication with each other.

### (Configuration of Remote Operation Device)

As illustrated in FIG. 1, the remote operation device 20 includes a remote control device 200 (control device and control unit), a remote input interface 210 (input unit), a remote output interface 220 (output unit), and a remote wireless communication device 250 (communication device) capable of communicating with the work machine 40 via a network. The remote control device 200 includes an arithmetic processing device (a single-core processor or a multicore processor or a processor core constituting the same), reads necessary data and software from a storage device such as a memory, and executes arithmetic processing according to the software on the data. The remote control device 200 can also operate the predetermined work machine 40 by the remote input interface 210 by communicating with the predetermined work machine 40 selected from the plurality of work machines 40 through the remote wireless communication device 250. In addition, the remote control device 200 controls a seat drive device 224 so as to execute a first drive process and a second drive process to be described later.

The remote input interface 210 includes a remote operation mechanism 211 that receives an operation by an operator. The remote output interface 220 includes a remote image output device 221, a remote sound output device 222, and a seat drive device 224.

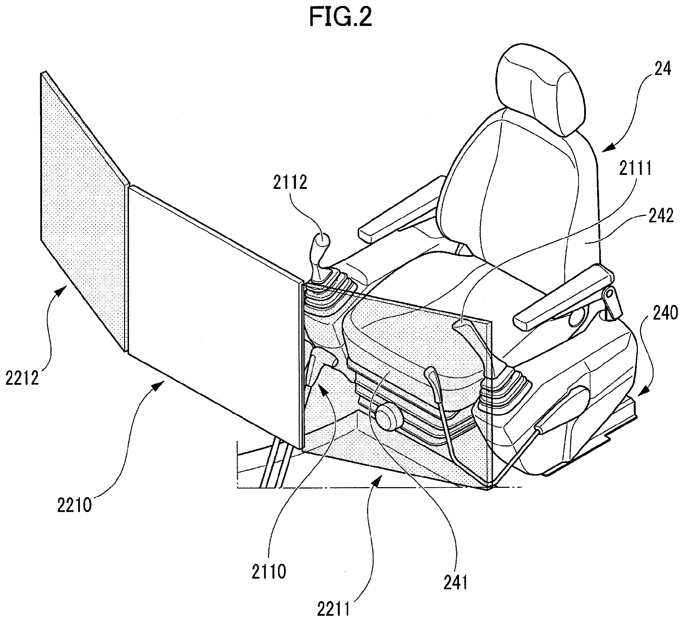

FIG. 2 is a perspective view of the remote operation mechanism 211 according to the present embodiment. The remote operation mechanism 211 includes devices and members illustrated in FIG. 2, and includes a travelling operation device, a slewing operation device, a boom operation device, an arm operation device, and a distal end attachment operation device. Each operation device includes an operation lever that receives a turning operation. An operation lever (travelling lever) of the travelling operation device is operated to drive a hydraulic travelling motor (actuator) constituting a travelling drive mechanism in a lower travelling body 41 of the work machine 40. The travelling lever may also serve as a travelling pedal. For example, a travelling pedal fixed to the base or lower end of the travelling lever may be provided. An operation lever (slewing lever) of the slewing operation device is operated to move a hydraulic slewing motor (actuator) constituting a slewing drive mechanism of the work machine 40. An operation lever (boom lever) of the boom operation device is operated to move a boom cylinder 442 of the work machine 40. An operation lever (arm lever) of the arm operation device is operated to move an arm cylinder 444 of the work machine 40. An operation lever (distal end attachment lever) of the distal end attachment operation device is operated to move a distal end attachment cylinder 446 of the work machine 40. The optional pedal disposed on the side of the travelling pedal is operated to move a distal end attachment or the like of the work machine 40.

Each operation lever constituting the remote operation mechanism 211 is disposed around a seat 24 on which the operator sits, for example, as illustrated in FIG. 2. The seat 24 has a seat portion 241 installed above a seat base 240 and a backrest portion 242, and is in the form of a high back chair with an armrest, but may be a seating portion in any form that allows an operator to sit, such as in the form of a low back chair without a headrest or in the form of a chair without the backrest portion 242.

Left and right travelling levers 2110 corresponding to left and right crawlers are arranged side by side in front of the seat 24. One operation lever may also serve as a plurality of operation levers. For example, a left operation lever 2111 provided in front of the left frame of the seat 24 illustrated in FIG. 2 may function as an arm lever when operated in the front-rear direction, and may function as a slewing lever when operated in the left-right direction. Similarly, a right operation lever 2112 provided in front of the right frame of the seat St illustrated in FIG. 2 may function as a boom lever when operated in the front-rear direction, and may function as a distal end attachment lever when operated in the left-right direction. Such a lever pattern may be arbitrarily changed by an operation instruction of an operator.

The remote image output device 221 includes a single or a plurality of image output devices. As illustrated in FIG. 2, for example, the remote image output device 221 includes a central remote image output device 2210, a left remote image output device 2211, and a right remote image output device 2212 each having a substantially rectangular screen and disposed in front of, diagonally forward to the left of, and diagonally forward to the right of the seat 24, respectively. The shapes and sizes of the screens (image display areas) of the central remote image output device 2210, the left remote image output device 2211 and the right remote image output device 2212 may be the same or different. The remote image output device 221 may include a single curved or bendable image output device, two or four or more image output devices arranged to surround the front of the seat 24.

As illustrated in FIG. 2, the right edge of the left remote image output device 2211 is adjacent to the left edge of the central remote image output device 2210 such that the screen of the central remote image output device 2210 and the screen of the left remote image output device 2211 form an angle of 120° to 150°. As illustrated in FIG. 2, the left edge of the right remote image output device 2212 is adjacent to the right edge of the central remote image output device 2210 such that the screen of the central remote image output device 2210 and the screen of the right remote image output device 2212 form an angle of 120° to 150°.

The respective screens of the central remote image output device 2210, the left remote image output device 2211 and the right remote image output device 2212 may be parallel to the vertical direction or may be inclined with respect to the vertical direction. At least one of the central remote image output device 2210, the left remote image output device 2211, and the right remote image output device 2212 may be constituted by a plurality of divided image output devices. For example, the central remote image output device 2210 may include vertically adjacent image output devices having a substantially rectangular screen.

The remote sound output device 222 includes one or a plurality of speakers, and includes, for example, sound output devices disposed behind the seat 24, behind the left armrest, and behind the right armrest. The specifications of the respective sound output devices may be the same or different.

The seat drive device 224 constitutes a "seat device" together with the seat 24. The seat drive device 224 can adjust the orientation of the seat 24. The seat drive device 224 is configured such that the seat 24 tilts or swings relative to the seat base 240 (or integrally with the seat base 240) about a pitch axis and/or a roll axis (optionally about a roll axis). The seat drive device 224 may vibrate the seat 24 relative to the seat base 240 (or integrally with the seat base 240) in at least one of a pitch axis, a roll axis, and a yaw axis.

### (Configuration of Work Machine)

As illustrated in FIG. 1, the work machine 40 includes an actual machine control device 400, an actual machine input interface 410, an actual machine output interface 420, and an actual machine wireless communication device 450. Each of the components of the actual machine control device 400 includes an arithmetic processing device (a single-core processor or a multicore processor or a processor core constituting the same), reads necessary data and software from a storage device such as a memory, and executes arithmetic processing according to the software on the data.

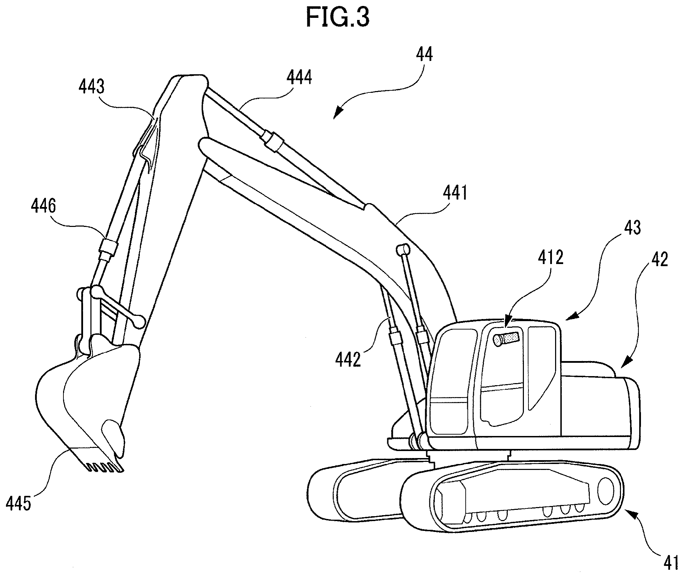

FIG. 3 is a perspective view of the work machine 40 according to the present embodiment. The work machine 40 is, for example, a hydraulic excavator, and as illustrated in FIG. 3, includes a crawler type lower travelling body 41 constituting a travelling drive mechanism, and an upper slewing body 42 swingably mounted on the lower travelling body 41 via a slewing drive mechanism. A cab 43 (operator's cab) is provided at a left front portion of the upper slewing body 42. A work mechanism 44 is provided in a right front portion of the upper slewing body 42. The cab 43 may be driven up and down with respect to the upper slewing body 42 by a lifting and lowering drive mechanism (not illustrated) including a link mechanism and an actuator, and may be configured such that an inclination angle with respect to the upper slewing body 42 can be changed by a tilt drive mechanism (not illustrated) including an actuator.

The actual machine input interface 410 includes an actual machine operation mechanism 411, an actual machine imaging device 412, and an actual machine sensor group 416. The actual machine operation mechanism 411 includes a plurality of operation levers arranged around the seat arranged inside the cab 43 in the same manner as the remote operation mechanism 211. An actuation mechanism or a robot that receives a signal corresponding to the operation mode of the remote operation lever and moves the actual machine operation lever based on the received signal is provided in the cab 43. The actual machine imaging device 412 is installed inside the cab 43, for example, and images an environment including at least a part of the work mechanism 44 through the front windshield and the left and right side windshields. Some or all of the front windshields and the side windshields may be omitted.

The actual machine sensor group 416 includes various sensors that output a signal corresponding to the value of the parameter regarding the state of the work machine 40 to the actual machine control device 400. The state of the work machine 40 includes the actual machine orientation, that is, the inclination angle (pitch angle) around the pitch axis and/or the inclination angle (roll angle) around the roll axis with respect to the vertical direction of the upper slewing body 42. The actual machine orientation sensor includes, for example, a three-dimensional acceleration sensor. The state of the work machine 40 may include a derricking angle of a boom 441 with respect to the upper slewing body 42, a turning angle of an arm 443 with respect to the boom 441, a turning angle of a distal end attachment 445 (lifting magnet) with respect to the arm 443, an operating hydraulic pressure, a remaining fuel amount, and the like, in addition to the presence or absence of the operation of the prime mover (machines that generate vibration, such as an engine and a work oil pump).

As illustrated in FIG. 3, the work mechanism 44 (actuation mechanism) includes a boom 441 having a proximal end mounted on the upper slewing body 42 so as to be capable of rising and falling, an arm 443 having a proximal end rotatably connected to a distal end of the boom 441, and a distal end attachment 445 having a proximal end rotatably connected to a distal end of the arm 443. The work mechanism 44 is mounted with a boom cylinder 442, an arm cylinder 444, and a distal end attachment cylinder 446 as actuators including telescopic hydraulic cylinders. As the distal end attachment 445, in addition to a bucket having a container for accommodating an object such as earth and sand, a lifting magnet, a grappler for gripping an object by opening and closing a plurality of facing gripping claws, a bucket with a hook capable of locking an object to a hook attached to a back surface and lifting the object, a breaker having a chisel supported by a breaker body so as to be able to reciprocate and giving a shock to a work object, or the like may be adopted. The chisel of the breaker may be operable by a switch. In addition, a swing mechanism for swinging the distal end portion to the right and left with respect to each of the proximal end portions, and a slide arm which is provided with a slidable expansion/contraction mechanism on the arm 443 and expands/contracts the arm 443 may be provided at the proximal end portion of the boom 441 and the proximal end portion of the arm 443, and may be operable by a switch or an optional pedal. A dozer having a dozing plate lifting and lowering drive mechanism for lifting and lowering the dozing plate by a dozer cylinder may be provided on the front side of the lower travelling body 41, and may be operable by a switch or an optional pedal.

The boom cylinder 442 is interposed between the boom 441 and the upper slewing body 42 so as to expand and contract by receiving the supply of the hydraulic oil to rotate the boom 441 in the derricking direction. The arm cylinder 444 is interposed between the arm 443 and the boom 441 so as to expand and contract by receiving the supply of the hydraulic oil to rotate the arm 443 about the horizontal axis with respect to the boom 441. The distal end attachment cylinder 446 is interposed between the distal end attachment 445 and the arm 443 so as to expand and contract by receiving the supply of the hydraulic oil to rotate the distal end attachment 445 about the horizontal axis with respect to the arm 443.

### (Function)

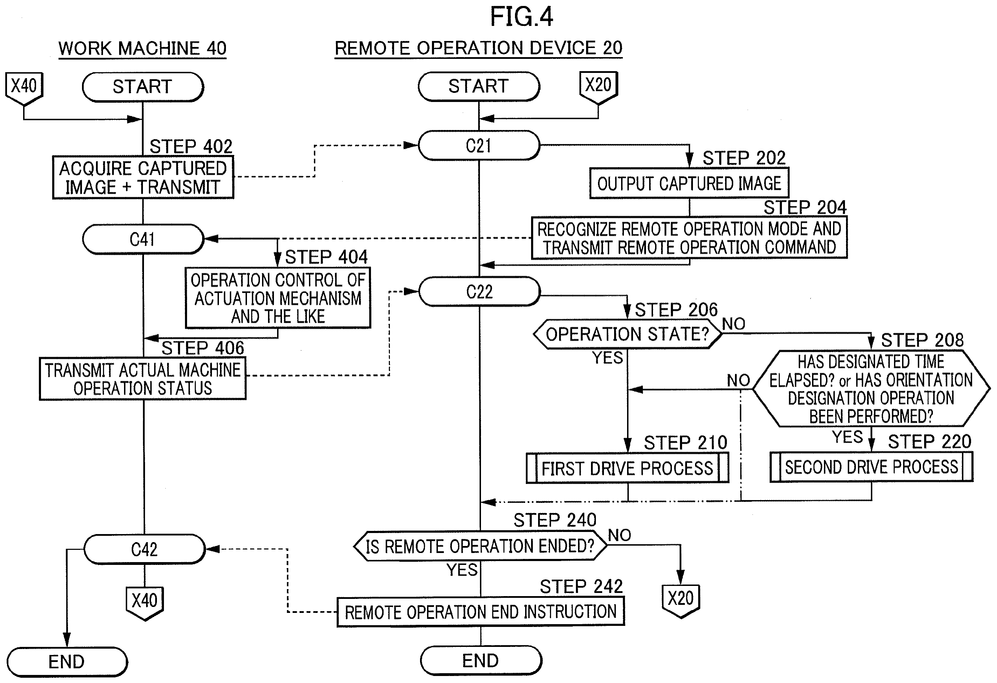

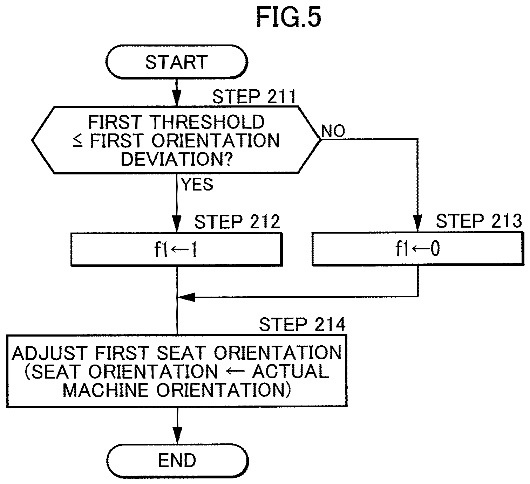

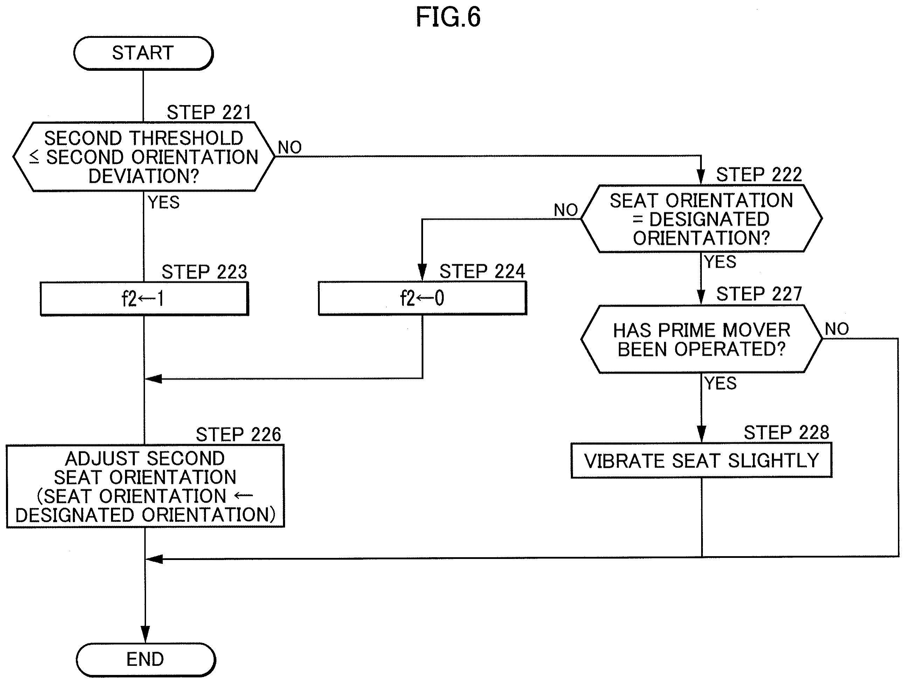

FIG. 4 is a flowchart of the operation system according to the present embodiment. FIG. 5 is a flowchart of a first drive control process of the operation system according to the present embodiment. FIG. 6 is a flowchart of a second drive control process of the operation system according to the present embodiment. The functions of the remote operation device 20 and the remote operation system having the above configuration will be described with reference to FIGS. 4 to 6. In the flowchart, the block "C (number)" is used for simplification of description, and means transmission and/or reception of data, and conditional branching in which processing in the branch direction is executed on condition of transmission and/or reception of the data.

On condition that the communication between the remote operation device 20 and the work machine 40 is established, in the work machine 40, the actual machine control device 400 transmits the captured image acquired through the actual machine imaging device 412 to the remote operation device 20 (FIG. 4/STEP 402). The captured image (or captured image data) may be image data representing a simulated environmental image generated based on the captured image in addition to the captured image itself.

Note that, for example, in the remote operation device 20, the remote control device 200 may transmit a designation signal to the work machine 40 through the remote wireless communication device 250 so that the communication between the remote operation device 20 and the work machine 40 is established. When the plurality of work machines 40 are the plurality of operated object candidates, the remote control device 200 may transmit the designation signal to each of the plurality of work machines 40. The presence or absence of the designation operation by the operator through the remote input interface 210 may be determined by the remote control device 200, and the remote control device 200 may transmit the designation signal when the determination result is positive. The "designation operation" is, for example, an operation such as a tap on the remote input interface 210 for designating the work machine 40 intended to be remotely operated by the operator. An operation receiving unit that receives an operation such as the tap may be provided in the seat 24 or near the seat 24.

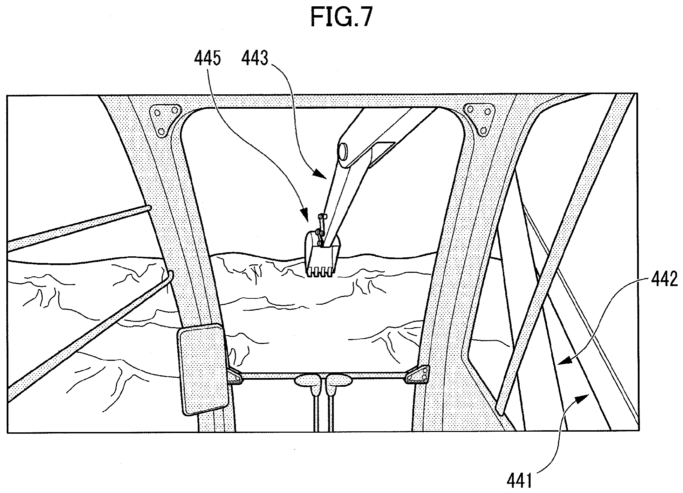

When the captured image is received by the remote operation device 20 through the remote wireless communication device 250 (FIG. 4/C21), the captured image is output to the remote image output device 221 (display device) by the remote control device 200 (FIG. 4/STEP 202). FIG. 7 is a diagram illustrating a working environment image in the operation system according to the present embodiment. For example, as illustrated in FIG. 7, in addition to the ground spreading in front of the cab 43, a captured image in which a bucket corresponding to the distal end attachment 445 that is a part of the work mechanism 44, the ground, and the like are reflected is output to the remote image output device 221.

In the remote operation device 20, the remote control device 200 recognizes the operation mode of the remote operation mechanism 211 and transmits a remote operation command corresponding to the operation mode to the work machine 40 through the remote wireless communication device 250 (FIG. 4/STEP 204).

In the work machine 40, when the actual machine control device 400 receives the remote operation command through the actual machine wireless communication device 450 (FIG. 4/C41), the operation of the work mechanism 44 and the like is controlled according to the remote operation command (FIG. 4/STEP 404). For example, while the bucket as the distal end attachment 445 holds an object such as earth and sand, a predetermined operation accompanied by an operation of the work mechanism 44 or the like is executed to displace the real space position of the bucket (see FIG. 7).

In the work machine 40, the actual machine control device 400 transmits the actual machine operation status (information) acquired through the actual machine sensor group 416 to the remote operation device 20 (FIG. 4/STEP 406). The actual machine operation status includes an actual machine orientation (an inclination angle around the pitch axis and/or the roll axis with respect to the vertical direction of the upper slewing body 42), presence or absence of operation of the prime mover, an orientation of the work mechanism 44, and the like.

In the remote operation device 20, when the actual machine operation status is received through the remote wireless communication device 250 (FIG. 4/C22), the remote control device 200 determines whether the remote operation device 20 is in an operation state where there is an operation instruction for the work machine 40 to be operated through the remote operation mechanism 211 (whether it is a non-operation state where there is no operation instruction for the work machine 40) (FIG. 4/STEP 206). For example, the determination process is executed depending on whether at least one of the following conditions is satisfied: the cutoff lever constituting the remote operation mechanism 211 is not operated to the hydraulic lock side; the operation lever constituting the remote operation mechanism 211 receives an external force (acting from the body of the operator); an operation is performed to start a prime mover such as an engine of the work machine 40; for example, the line of sight of the operator detected by the line-of-sight detection device is continuously directed to the remote image output device 221 for a certain period or longer; and the emergency stop switch constituting the remote input interface 210 is OFF, that is, the condition indicating that the operator has a high probability of having an intention of remotely operating the work machine 40. When operated to the hydraulic lock side, the cutoff lever disables operation control of the work mechanism 44 and the like of the work machine 40 according to the operation mode of the remote operation mechanism 211. When the cutoff lever is operated to a side opposite to the hydraulic lock side, the operation control is enabled. In addition, the operation of starting the prime mover such as the engine of the work machine 40 is detected based on the state of the prime mover and the presence or absence of the operation on the remote input interface 210.

When determining that remote operation device 20 is in the operation state (FIG. 4/YES in STEP 206), the remote control device 200 executes the "first drive process" (FIG. 4/STEP 210).

Specifically, the remote control device 200 determines whether a first orientation deviation, which is a deviation between the seat orientation and the actual machine orientation, is a first threshold or more (FIG. 5/STEP 211). The seat orientation is detected by an inclination angle about the pitch axis and/or the roll axis based on the initial orientation of the seat 24.

When the determination result is positive (FIG. 5/YES in STEP 211), that is, when the deviation between the seat orientation and the actual machine orientation is relatively large, a first flag f1 is set (or maintained) to "1" (FIG. 5/STEP 212). On the other hand, when the determination result is negative (FIG. 5/NO in STEP 211), that is, when the deviation between the seat orientation and the actual machine orientation is relatively small, the first flag f1 is set (or maintained) to "0" (FIG. 5/STEP 213). The "first flag f1" is a flag indicating presence or absence of limitation of the orientation change speed (inclination angular velocity around the pitch axis and/or the roll axis) of the seat 24 or necessity thereof when a first seat orientation adjustment process (described later) is executed.

Then, the remote control device 200 controls the operation of the seat drive device 224 to execute a "first seat orientation adjustment process" in which the orientation of the seat 24 is adjusted so as to align or match the seat orientation with the actual machine orientation (FIG. 5/STEP 214). Here, when the first flag f1 is set to "1", the orientation change speed of the seat 24 is limited to or less than the first orientation change speed (maintained small). When the first flag f1 is set to "0", the limitation of the orientation change speed of the seat 24 is released. Regardless of whether the first orientation deviation is equal to or greater than the first threshold, the first orientation change speed may be adjusted so as to decrease continuously or stepwise as the first orientation deviation increases.

When the first seat orientation adjustment process is executed, the remote control device 200 may execute a low-pass filtering process of removing a high-frequency component equal to or greater than a threshold among frequency components included in a time-series waveform of the orientation based on a time series of the orientation of the actual machine, and adjust a time change mode of the seat orientation by controlling the operation of the seat drive device 224 according to a time series of the orientation subjected to the low-pass filtering process. In a time series of the orientation of the actual machine, a vibration component having a relatively high frequency as noise caused by vibration received by the lower travelling body 41 from the travelling road surface and vibration of the prime mover of the work machine 40 is superimposed. However, the remote control device 200 can remove the vibration component as noise by performing the low-pass filtering process in a time series of the orientation of the actual machine, and thus can accurately acquire (calculate) a time series of the orientation of the actual machine. When executing the first drive process, the remote control device 200 may omit the first orientation deviation magnitude determination process and the first flag f1 setting process according to the determination result (see FIG. 5/STEP 211, STEP 212 and STEP 213).

On the other hand, when the remote control device 200 determines that the remote operation device 20 is in the non-operation state (FIG. 4/NO in STEP 206), that is, when the remote operation device 20 has changed from the operation state to the non-operation state (switched from the operation state to the non-operation state), the remote control device 200 determines whether the non-operation state has continued for a designated period or longer, or whether the orientation designation operation has been performed through the remote input interface 210 (FIG. 4/STEP 208). When the determination result is negative (FIG. 4/NO in STEP 208), the remote control device 200 executes the above-described "first drive process" (FIG. 4/STEP 210).

On the other hand, when the determination result is positive (FIG. 4/YES in STEP 208), the remote control device 200 interrupts or terminates the execution of the "first drive process", and executes the "second drive process" (FIG. 4/STEP 220). At this time, the presence of an orientation designation operation through the remote input interface 210 is a condition for execution of the "second drive process". That is, the remote input interface (or an operation input unit for orientation designation operation constituting the remote input interface 210) constitutes an "input unit that detects an operation of the operator for executing the second drive process according to the operator's intention" (an input unit that receives an input of a command for executing the second drive process from the operator) of the present invention.

Specifically, the remote control device 200 determines whether a second orientation deviation, which is the deviation between the seat orientation and the designated orientation, is equal to or greater than a second threshold (FIG. 6/STEP 221). The second threshold may be equal to the first threshold, or may be larger or smaller than the first threshold. The "designated orientation" is, for example, a predetermined orientation of the seat 24, such as an initial orientation of the seat 24 or an orientation of the seat 24 at the commencement of the non-operation state. The initial orientation of the seat 24 may be an orientation in which the seat portion 241 is slightly inclined forward (for example, 5° to 20° with respect to the horizontal plane) in consideration of convenience of the operator sitting on the seat 24 (or rising from the seat 24). The designated orientation may be an orientation in which the seat portion 241 (or the main seat surface) is horizontal, or may be an orientation in which the seat portion 241 is slightly (for example, 5° to 15° with respect to the horizontal plane) inclined backward in consideration of the stability of seating.

When the determination result is positive (FIG. 6/YES in STEP 221), that is, when the deviation between the seat orientation and the designated orientation is relatively large, the second flag f2 is set (or maintained) to "1" (FIG. 6/STEP 223). The "second flag f2" is a flag indicating presence or absence of limitation of the orientation change speed (inclination angular velocity around the pitch axis and/or the roll axis) of the seat 24 or necessity thereof when a second seat orientation adjustment process (described later) is executed.

Then, the remote control device 200 executes the "second seat orientation adjustment process" of adjusting the orientation of the seat 24 so as to align or match the seat orientation with the designated orientation by controlling the operation of the seat drive device 224 (FIG. 6/STEP 226). When the second flag f2 is set to "1", the orientation change speed of the seat 24 is limited to a second orientation change speed or less. Regardless of whether the second orientation deviation is equal to or greater than the second threshold, the second orientation change speed may be adjusted so as to decrease continuously or stepwise as the second orientation deviation increases.

On the other hand, when the determination result is positive (FIG. 6/NO in STEP 221), that is, when the deviation between the seat orientation and the designated orientation is relatively small, it is determined whether the seat orientation is matched with the designated orientation (FIG. 6/STEP 222). When it is determined that the seat orientation and the designated orientation are different (FIG. 6/STEP 222..NO), the second flag f2 is set (or maintained) to "0" (FIG. 6/STEP 224).

Then, the remote control device 200 executes the "second seat orientation adjustment process" of adjusting the orientation of the seat 24 so as to align or match the seat orientation with the designated orientation by controlling the operation of the seat drive device 224 (FIG. 6/STEP 226). When the second flag f2 is set to "0", the limitation of the orientation change speed of the seat 24 is released.

When it is determined that the seat orientation is matched with the designated orientation (FIG. 6/YES in STEP 222), the remote control device 200 determines whether the prime mover of the work machine 40 is operated based on the actual machine operation status (see FIG. 4/STEP 406) (FIG. 6/STEP 227). When the determination result is negative (FIG. 6/NO in STEP 227), the second drive process of this time is ended. When the determination result is positive (FIG. 6/YES in STEP 227), the seat 24 is vibrated by the seat drive device 224 (FIG. 6/STEP 228). At this time, the seat 24 vibrates at a predetermined minute amplitude around the pitch axis and/or the roll axis and at a frequency corresponding to the frequency of the prime mover, so that the orientation of the seat 24 slightly changes with reference to the designated orientation. Alternatively, the seat 24 vibrates at a predetermined minute amplitude and a frequency corresponding to the frequency of the prime mover along a direction parallel to at least one of the pitch axis, the roll axis, and the yaw axis, so that the orientation of the seat 24 slightly changes in at least one of the front-back direction, the left-right direction, and the up-down direction while being maintained at the designated orientation.

When the second drive process is executed, a process of determining the magnitude of the second orientation deviation and a process of setting the second flag f2 according to the determination result may be omitted (see FIG. 6/STEP 221, STEP 223 and STEP 224). In addition, the process of determining whether the prime mover is operated and the application of vibration of the seat 24 according to the determination result may be omitted (see FIG. 6/STEP 227 and STEP 228).

In the remote operation device 20, the remote control device 200 determines whether the remote input interface 210 or the remote operation mechanism 211 has received an end operation for ending the operation of the work machine 40 (FIG. 4/STEP 240).

The presence or absence of the "end operation" is detected according to whether the operation lever, the travelling pedal, or the optional pedal constituting the remote input interface 210 is returned to the neutral position or the initial position in order to cause the work machine 40 to end the predetermined operation of the actuation mechanism such as the work mechanism 44. At this time, the presence or absence of the end operation may be determined based on whether the state is maintained for a certain period of time in addition to the fact that each lever or pedal is returned to the neutral position or the initial position. In addition, the presence or absence of the "end operation" may be detected according to various conditions such as whether the cutoff lever is operated to the hydraulic lock state, whether an operation to stop the operation of the prime mover of the work machine 40 is performed in the remote input interface 210, and whether the switch constituting the remote input interface 210 is switched from the ON state to the OFF state in order to cause the work machine 40 to end the predetermined operation of the actuation mechanism such as the work mechanism 44. The presence or absence of the "end operation" may be detected according to whether a plurality of conditions is satisfied in combination.

When it is determined that there is no end operation (FIG. 4/NO in STEP 240), the reception of the captured image, the output to the remote image output device 221 (see FIG. 4/C21→STEP 202), and the subsequent processes are repeated, and the operation according to the remote operation command is continued in the work machine 40.

On the other hand, when it is determined that the end operation has been performed (FIG. 4/YES in STEP 240), in the remote operation device 20, the remote control device 200 transmits a remote operation stop signal to the work machine 40 through the remote wireless communication device 250 (STEP 242 in FIG. 5).

In the work machine 40, when the actual machine control device 400 receives the remote operation stop signal through the actual machine wireless communication device 450 (FIG. 4/C42), the operation of the actuator of the actuation mechanism is controlled such that the operation of the work mechanism 44 and the like is terminated.

### (Operation and Effect)

According to the remote operation device 20 that exerts the above function and the operation system configured by the remote operation device 20, the remote control device 200 controls the seat drive device 224 to execute the first drive process, and thus, it is possible to transmit a time series or the time change mode of the orientation of the work machine 40, which is the operated object, to the operator seated on the seat 24 through a time series or the time change mode of the orientation of the seat 24 (see FIG. 4/STEP 210 and FIG. 5/STEP 211 to STEP 214). On the other hand, in a non-operation state where there is no operation instruction for the operated object by the operator through the remote operation mechanism 211, the first drive process is interrupted and the second drive process is executed (see FIG. 4/NO in STEP 206 →..→ STEP 220 and FIGS. 6/STEP 221 to STEP 218). As a result, since the orientation of the seat 24 is adjusted or held in the designated orientation, transmission of the time change mode of the orientation of the work machine 40, which is the operated object, to the operator seated on the seat 24 is blocked.

### (Another Embodiment of the Present Invention)

In the above embodiment, the second drive process is executed on condition (requirement) that the non-operation state of the remote operation device 20 has continued for the designated time or more (see FIG. 4/YES in STEP 208 → STEP 220). However, the second drive process may be executed immediately after the remote operation device 20 enters the non-operation state or in a case where an orientation designation operation is performed. Furthermore, the input unit (for example, the remote input interface 210 that detects an operation such as a tap) may be provided in the remote operation device 20. The input unit detects an operator's operation for executing the second drive process according to an operator's intention.

In the above embodiment, the orientation of the seat 24 is adjusted so as to align or match the seat orientation with the actual machine orientation (FIG. 5/STEP 214, FIG. 6/STEP 226). However, the orientation of the seat 24 may be adjusted so as to align or match the seat orientation with a correlation orientation correlated with the actual machine orientation. For example, a correlation orientation correlated with the actual machine orientation is calculated by multiplying the inclination angle around the pitch axis and/or the roll axis with respect to the vertical direction of the upper slewing body 42 in the actual machine orientation by a predetermined coefficient c (for example, c = 0.90, 1.1, etc.), and the orientation of the seat 24 is adjusted so as to be aligned or matched with the calculated correlation orientation. When the predetermined coefficient is set to be smaller than 1, the inclination angle in the correlation orientation is smaller than the inclination angle in the actual machine orientation, and when the predetermined coefficient is set to be larger than 1, the inclination angle in the correlation orientation is larger than the inclination angle in the actual machine orientation.

Provided according to a first aspect of the present invention is an operation device for operating an operated object, the operation device including: a seat; an operation mechanism that receives an operation by an operator; a drive device capable of adjusting an orientation of the seat; and a control device capable of controlling the drive device to execute a first drive process of adjusting the orientation of the seat such that the orientation of the seat changes in a time series according to a time series of an orientation of the operated object, and a second drive process of interrupting execution of the first drive process and adjusting the orientation of the seat to a designated orientation in a non-operation state where there is no operation instruction for the operated object through the operation mechanism.

According to the operation device having the above configuration, the orientation of the seat is adjusted by executing the first drive process by the control device, and the change in a time series (time change mode) of the orientation of the operated object can be transmitted (or recognized) to the operator seated on the seat. On the other hand, in a non-operation state where there is no operation instruction for the operated object by the operator, the first drive process is interrupted and the second drive process is executed. As a result, the orientation of the seat is adjusted or held in the designated orientation, and transmission of the time-series change in the orientation of the operated object to the operator seated on the seat is blocked.

According to a second aspect of the present invention, in the operation device according to the first aspect, the control device may execute the second drive process in a case where the non-operation state continues for a designated time or more.

According to the operation device having the above configuration, when there is no operation instruction of the operated object by the operator for a designated time or longer and it is highly probable that the operator does not have an operation intention of the operated object, the transmission of the time-series change in the orientation of the operated object to the operator seated on the seat can be blocked.

According to a third aspect of the present invention, in the operation device according to the first or second aspect, the designated orientation may be an orientation of the seat at a commencement of the non-operation state, an initial orientation of the seat, or an orientation in which a seat portion of the seat is horizontal.

According to the operation device having the above configuration, the orientation of the seat is adjusted to the orientation at the commencement of the non-operation state, the initial orientation, or the orientation in which the seat portion is horizontal by the execution of the second drive process, so that the operator can recognize that the non-operation state is continued. The initial orientation of the seat may be an orientation in which the seat portion is inclined forward in consideration of convenience of the operator sitting on the seat.

According to a fourth aspect of the present invention, the operation device according to any one of the first to third aspects may further include an input unit that receives an input of a command for executing the second drive process from an operator.

According to the operation device having the above configuration, the second drive process is executed according to the intention of the operator, and the seat is adjusted to the designated orientation, so that the time-series change in the orientation of the operated object can be blocked from being transmitted to the operator through the seat.

According to a fifth aspect of the present invention, in the operation device according to any one of the first to fourth aspects, the control device may control the drive device such that, in the first drive process, as a deviation degree between the orientation of the operated object and the orientation of the seat increases, an orientation change speed of the seat for aligning the orientation of the operated object and the orientation of the seat decreases.

According to the operation device having the above configuration, as the deviation degree between the orientation of the operated object and the orientation of the seat is higher, the orientation change speed of the seat for aligning the orientation of the operated object and the orientation of the seat is reduced. Accordingly, in order to align the orientation of the seat with the orientation of the operated object, it is possible to avoid a situation in which the orientation change speed of the seat becomes too high and the operator feels uncomfortable. On the other hand, as the deviation degree is lower, the orientation of the operated object can be more quickly reflected or transmitted to the orientation of the seat, and the operator can recognize the time-series change in the orientation of the operated object in real time.

According to a sixth aspect of the present invention, in the operation device according to any one of the first to fifth aspects, in the first drive process, the control device may specify a frequency component included in a time series of the orientation of the operated object based on a time series of the orientation, execute a low-pass filtering process of removing a high-frequency component equal to or greater than a threshold among the frequency components specified from a time series of the orientation, and control the drive device according to a time series of the orientation subjected to the low-pass filtering process to adjust the orientation of the seat.

According to the operation device having the above configuration, the time change mode of the seat orientation corresponding to a time series on which the low-pass filtering process for removing the high-frequency component equal to or greater than the threshold among the frequency components included in the time series change of the orientation of the operated object is performed is transmitted to the operator seated on the seat. As a result, a time series of the orientation of the actual machine is accurately transmitted to the operator.

According to a seventh aspect of the present invention, in the operation device according to any one of the first to sixth aspects, the control device may vibrate the seat in the designated orientation in accordance with operation of a prime mover of the operated object in the second drive process.

According to the operation device having the above configuration, it is possible to cause the operator seated on the seat to recognize whether the prime mover of the operated object is operating through the presence or absence of vibration of the seat in the designated orientation. For example, in order to avoid a situation that makes the operator feel uncomfortable, the vibration of the seat is adjusted to weak vibration. The seat may be vibrated by reducing the gain according to the change speed of the orientation of the operated object, or the seat may be vibrated according to a predetermined vibration mode of the prime mover.

According to an eighth aspect of the present invention, in the operation device according to any one of the first to seventh aspects, a work machine as the operated object may be configured to be operated.

According to the operation device having the above configuration, the first drive process is interrupted and the second drive process is executed in a non-operation state where there is no operation instruction for the work machine to be operated by the operator. As a result, the orientation of the seat is adjusted or held in the designated orientation, and transmission of the time-series change in the orientation of the work machine to the operator seated on the seat is blocked.

Provided according to a ninth aspect of the present invention is an operation system including: the operation device according to any one of the first to eighth aspects; and the operated object.

## Claims

1. An operation device for operating an operated object, the operation device comprising:
a seat;
an operation mechanism that receives an operation by an operator;
a drive device capable of adjusting an orientation of the seat; and
a control device capable of controlling the drive device to execute a first drive process of adjusting the orientation of the seat such that the orientation of the seat changes in a time series according to a time series of an orientation of the operated object, and a second drive process of interrupting execution of the first drive process and adjusting the orientation of the seat to a designated orientation in a non-operation state where there is no operation instruction for the operated object through the operation mechanism.

2. The operation device according to claim 1, wherein the control device executes the second drive process in a case where the non-operation state continues for a designated time or more.

3. The operation device according to claim 1 or 2, wherein the designated orientation is an orientation of the seat at a commencement of the non-operation state, an initial orientation of the seat, or an orientation in which a seat portion of the seat is horizontal.

4. The operation device according to any one of claims 1 to 3, further comprising an input unit that receives an input of a command for executing the second drive process from an operator.

5. The operation device according to any one of claims 1 to 4, wherein the control device controls the drive device such that, in the first drive process, as a deviation degree between the orientation of the operated object and the orientation of the seat increases, an orientation change speed of the seat for aligning the orientation of the operated object and the orientation of the seat decreases.

6. The operation device according to any one of claims 1 to 5, wherein in the first drive process, the control device specifies a frequency component included in a time series of the orientation of the operated object based on a time series of the orientation, executes a low-pass filtering process of removing a high-frequency component equal to or greater than a threshold among the frequency components specified from a time series of the orientation, and controls the drive device according to a time series of the orientation subjected to the low-pass filtering process to adjust the orientation of the seat.

7. The operation device according to any one of claims 1 to 6, wherein the control device vibrates the seat in the designated orientation in accordance with operation of a prime mover of the operated object in the second drive process.

8. The operation device according to any one of claims 1 to 7, wherein a work machine as the operated object is configured to be operated.

9. An operation system comprising:
the operation device according to any one of claims 1 to 8; and
the operated object.
